# EUROPEAN PATENT SPECIFICATION

(11) **EP 1 843 182 B1**
(45) Date of publication and mention of the grant of the patent: **16.10.2013**
(21) Application number: 07425130.7
(22) Date of filing: 07.03.2007
(51) Int. Cl.: G02B 6/44

(54) **Cable joint box, in particular for optic fibre cables**
Kabelverbindungsbox, insbesondere für faseroptische Kabel
Boîte pour connections de cables, particulièrement pour câbles à fibres optiques

(30) Priority: 07.04.2006 IT RM20060197
(43) Date of publication of application: 10.10.2007
(73) Proprietor: C.I.S. Sud s.r.l., 00040 Ariccia (RM) (IT)
(72) Inventor: Bernardini, Giuseppe, 00040 Ariccia (RM) (IT)
(74) Representative: Santi, Filippo

(56) References cited:
- EP-A- 1 431 793
- WO-A-94/00786
- WO-A-96/10203
- WO-A-2004/051337
- GB-A- 2 378 769

## Description

The present invention concerns a cable joint box, in particular for optic fibre cables.

It is known that telephone cables and in particular those realised with optical fibres are produced industrially in sections and/or in pieces having different standard lengths, in particular in pieces 2000 - 3000 - 4000 - 6000 metres long.

The installation of telephone cables is performed by using preset facilities for their laying, which are in particular constituted by guide tubes, produced for such a purpose, and the distances that these cables have to cover need for the joint of more cable pieces having a standard length in order to realise a connection and/or a so called telephone network.

Since optic fibre cables are constituted by a plurality of single fibres, the joint between two cables more precisely asks for the joint of the corresponding single fibres, for doing which a suitable joint box, also indicated as junction box, is used, in which the single fibres of each of the two cables to be joined are separately and tidily arranged in order to be joined two by two (or in groups) together with the correspondent fibres of the other cable, said box being further required to be easy to open again for later interventions regarding the cables and/or for maintenance.

Joint boxes according to the prior art are constituted by a base, generally having a circular shape, and a cylindrical cover. On the base cables inlets and/or outlets are provided and, on the internal side, a frame is located having two opposite faces, on which a plurality of fibre organiser modular elements are arranged, also named trays.

On the trays the junction of single fibres or single groups of fibres is realised, the fibres are recovered two by two or in groups in order to realise a single circuit, the so called extra-length of the fibres is arranged, i.e. a certain additive length having the function of a reserve for possible subsequent needs.

In pratice, optical fibre cables enter the joint box from the base and once inside the box they are open in order to uncover the single fibres. The fibres are subsequently directed on one of the two faces of the frame, according to the needs and/or the preset junction plan, in order to reach the single junction and/or distribution trays to which they are directed.

On the vertical sides of each of the two faces of the frame, along their entire length, some seats are provided for containing the fibres coming from below and going to the top of the frame, reaching the various trays.

According to the rational use of the joint box, normally incoming fibres first engages with the trays that are placed lower and subsequently those placed higher. The latter, depending on the capacity of the fibres of the cables to be joined, can even remain empty, constituting a supply for the future.

As a consequence, the lower portion of each of the two faces of the frame turns out to be more crowded with fibres than the upper portion.

In some cases, due to reasons of connection of the optical circuits and/or to the necessity of realising a signal transmission routing, it is necessary to take some fibres from the trays on one face of the frame to the trays of the other face.

At present, the different solutions available to satisfy this need provide for the addition, on the lower portion of the frame, of devices for passing the fibres from one face to the other of the frame, continuously continuously granting the respect of the fibres characteristic minimum bend radius, i. e. a bend radius below which the fibres could be damaged.

The characteristic problems of the solutions according to the prior art are all due to the excessive concentration of the fibres in the same lower portion of the frame wherein the passage of the fibres from one face to the other of the frame happens. In particular, these problems are constituted by the frequency of relevant difficulties coming out in passing the fibres from one side to the other, by the difficulty of recovering the fibres and by the difficulty of directing them towards the assigned paths.

Since a working fibre transmits a great quantity of data, it is self evident that an imprudent and difficult handling of the same, due to difficulties in reaching it, can cause its damaging and the consequent interruption of the signal transmission, causing onerous burdens due to non-gain and/or producing the so called lost profit for the telephone service provider.

Document EP 1 431 793 discloses a cable joint box for optic fibre cables comprising a base and a cap that can be opened, on said base being realised one or more passages for cables inlet and/or outlet and being installed a support frame for one or more modular devices for housing, distributing and joining fibres, arranged on the two opposed faces of said frame.

In this context the solution according to the present invention as defined by appended claim 1 is thought to provide for a cable joint box, in particular for optic fibre cables, and in particular a device for housing and protecting optical fibres, wherein the fibre passage from one face to the other of the frame and/or from one side to the other of the same face of the frame of the joint box takes place solving the problems of the joint boxes according to the prior art, easing th task of the people in charge of the installation and minimising the risk of damaging the fibres.

These and other results are obtained according to the present invention by proposing a cable joint box, in particular for optic fibre cables and a device for housing and protecting optical fibres in their passing from one face to the other of the frame and/or from one side of the frame of the joint box to the opposite side wherein the passage of the fibres takes place superiorly on the upper part of the frame, in an area wherein there are not fibres needing to be directed to the different organising devices or trays or needing to be connected.

It is therefore a first specific object of the present invention a cable joint box, in particular for optic fibre cables, of the kind comprising a base and a cover that can be opened, on said base being realised one or more passages for cables inlet and/or outlet and being installed a support frame for one or more modular devices for housing, distributing and joining fibres, arranged on the two opposed faces of said frame, comprising means for housing and protecting the passage of said fibres from one face to the other of said frame and/or from one side to the other of the same face of said frame, which are arranged on the upper part of the top of the frame.

In particular, according to the invention, said means for housing and protecting the passage of said fibres from one face to the other of the frame and/or from one side to the other of the same face of said frame define a seat for the passage and the protection of the fibres, provided with four inlet areas, each defining a continuous curve path radiused with the top of each of the seats for housing the fibres coming up from below and going upward along said frame, for housing the radius of said curve path being greater or equal to the minimum bend radius of the fibres.

Preferably, according to the invention, said seat for the passage of the fibres in protected on the sides by raised portions and is further partially protected by one or more tabs provided on the upper portion of said raised portions and bent towards the seat.

It is further a second specific object of the present invention a device for housing and protecting optical fibres in their passage from one face to the other of the frame of a joint box, and/or from one side to the other of the same face of said frame, comprising means for coupling with said frame in correspondence with its top, and defining a seat for the passage and the protection of the fibres, provided with four inlet areas, each defining a continuous curve path radiused with the top of each of the seats for housing the fibres coming up from below and going upward along said frame for housing, the radius of said curve path being greater or equal to the minimum bend radius of the fibres.

Preferably, according to the invention, said seat for the passage of the fibres in protected on the sides by raised portions and is further partially protected by one or more tabs provided on the upper portion of said raised portions and bent towards the seat.

Further, according to the invention, said means for coupling with said frame are constituted by portions that can be inserted in the room defined between the two faces of said frame.

Always according to the invention, said device for housing and protecting optical fibres is constituted by two parts that can be coupled back on back, said parts being preferably identical and realised in plastic material from a single mould.

Preferably, said parts comprise complimentary means for restrained coupling and have a box structure provided with ribs.

Further, according to the invention, each of said parts can comprise a passage for the safety stretch ribbon of the trays, and defines half seat for the passage and the protection of the fibres, and two inlet areas to said seat, each defining a continuous curve path radiused with the top of each of the seats for housing the fibres coming up from below and going upwards along a face of the frame of a cable joint box for housing, the radius of said curve path being greater or equal to the minimum bend radius of the fibres, each of said two parts further comprising raised portions for protecting said seat.

The present invention will now be described, for illustrative non limitative purposes, according to its preferred embodiments, with particular reference to the figures of the enclosed drawings, in which
figure 1 shows a joint box or connection box, in an open configuration, in an embodiment according to the prior art,
figure 2 shows a device for housing and protecting optical fibres in their passage from one side to the other of the frame of a joint box, according to the present invention,
figure 3 shows one of the two identical parts making up the device for housing and protecting fibres of figure 2,
figure 4 shows the two identical parts making up the device for housing and protecting fibres of figure 2, in a position prearranged for coupling,
figure 5 shows the device for housing and protecting fibres of figure 2, arranged on the frame of a connection box, and
figure 6 shows a cable joint box, in particular for optic fibre cables, in an open position, in which the device for housing and protecting fibres of figure 2 is arranged.

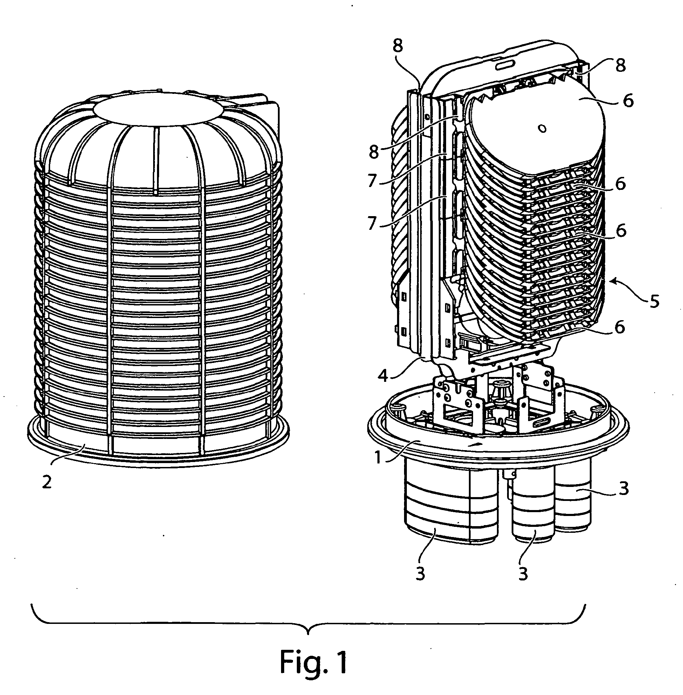

Making preliminary reference to figure 1, in which a joint box or connection box according to the prior art, in an open position, is shown, a circular base 1 and a cylindrical cap 2 are indicated. On the circular base cables inlet and/or outlet passages 3 are provided. Further, on the upper side of the base 1 a rectangular frame 4 is arranged, on the two faces of which modular devices 5 for housing, distributing and joining fibres are positioned, comprising in particular a plurality of trays 6 hinged in groups on support plates 7 fixed to the frame 4.

On the sides of the plates 7 tracks 8 are provided defining, together with the tracks of the upperly and lowerly adiacent plate, seats for housing the fibres coming up from below and going upward along the frame, said seats spreading, on the vertical sides of each of the two faces of the frame 4, all over their length.

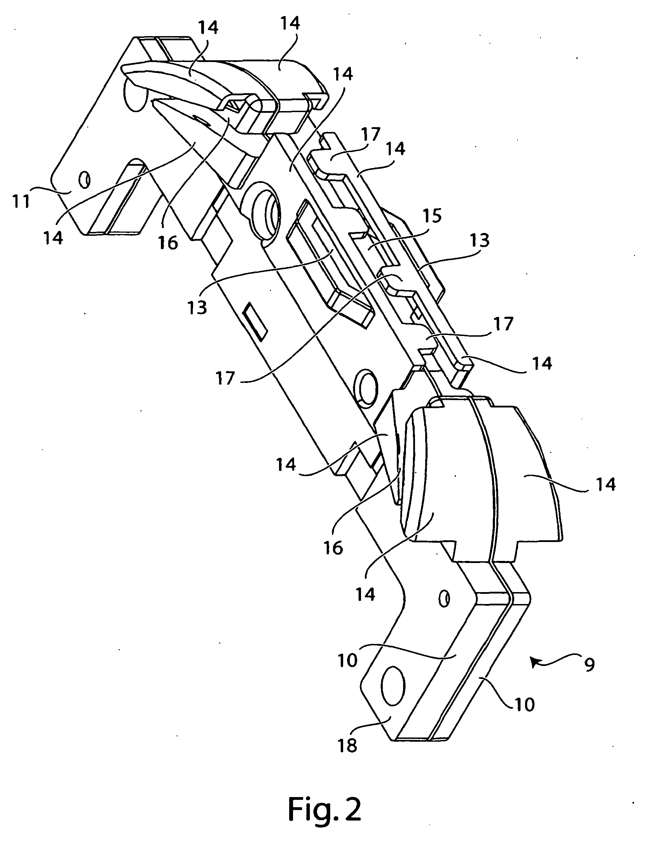

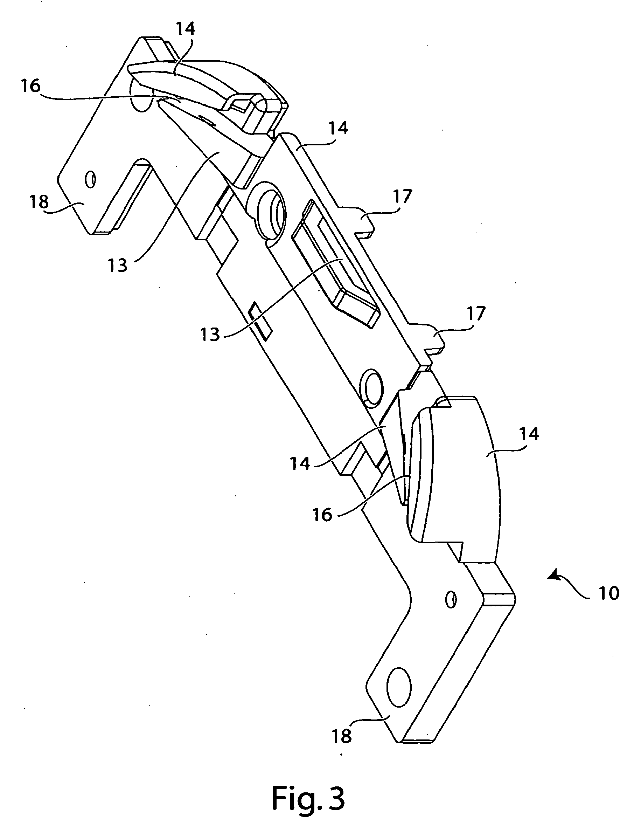

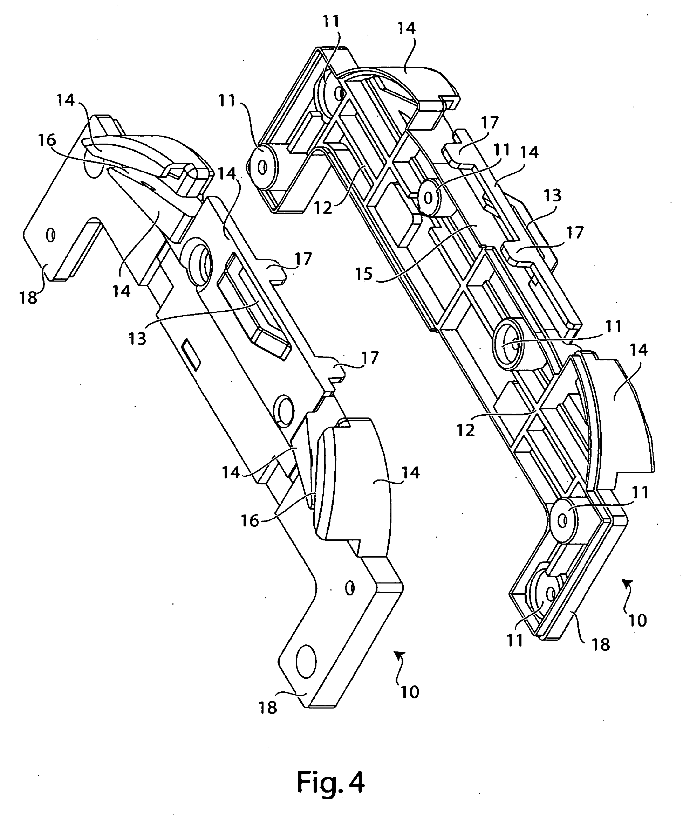

With reference to figures 2 - 4, a device for housing and protecting optical fibres passing from one side to the other of the frame of a joint box or connection box, according to the present invention, indicated with the numeric reference 9, is shown. The device 9 for housing and protecting fibres defines a protected path linking together the four seats for housing the fibres coming from below and going upward along the frame 4.

The device 9 for housing and protecting fibres allows to realise paths going from one seat for housing the fibres to the other seat of the same face of the frame or from a seat for housing the fibres to the farest seat on the opposed face of the frame 4.

In particular, the device 9 for housing and protecting fibres is constituted by two identical parts 10, that can be coupled back on back, preferably realised in plastic material from a single mould.

On each of the two parts 10 means for restrained coupling 11 are provided, for a mechanically solid back on back coupling of the two parts 10. In order to increase the sturdiness of parts 10, their structure is box shaped and is provided with a plurality of ribs 12.

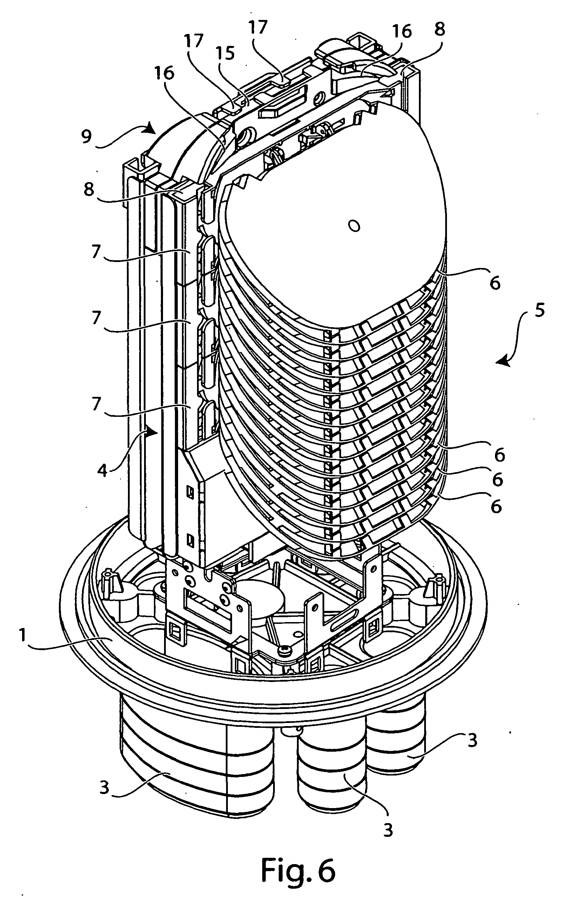

Each part 10 is provided with a passage 13 for a ribbon (not shown), also called trace safety stretch ribbon, whose function is that of maintaining the trays in a rest position, as shown in figure 6, surronding them so that they cannot turn around their hinge point, after terminating the intervention operations on one or more of them. This passage was already present in the solutions of the prior art, as shown in figure 1, and was realised on an upward extension of the frame 4 going beyond the useful portion for arranging modular devices 5 for housing, distributing and joining fibres.

On the top portion of each part 10 some raised portions 14 are provided defining a seat 15 for the passage and the protection of the fibres, provided with two inlet areas 16 suitably shaped in order to define a continuous curve path radiused with the top of the seats for housing the fibres coming up from below and going upward along the frame 4, while respecting the minimum bend radius of the fibres.

Globally, the coupling of the two parts 10 to form the device 9 for housing and protecting fibres allows for having a common central seat for the passage of the fibres, defined by approaching the two seats 15 of each part 10 and in which the fibres can enter through four inlet areas 16. A plurality of tabs 17, positioned on the upper portion of the raised portions 14 and bent towards the seat 15 defined by the raised portions 14, define alternated "roofs" for protecting the fibres.

Finally, the device 9 for housing and protecting fibres is provided with two lower portions 18 suitable for being inserted in the room defined jointly between the two faces of the frame 4 in order to assure the coupling of the device 9 with the frame 4, without increasing its overall dimensions in heigth, by substituting the upward extension of the frames according to the prior art, the presence of which is superfluous in order to grant a passage for the safety ribbon of the trays in view of the position of this passage 13 directly on the body of the device 9 for housing and protecting fibres.

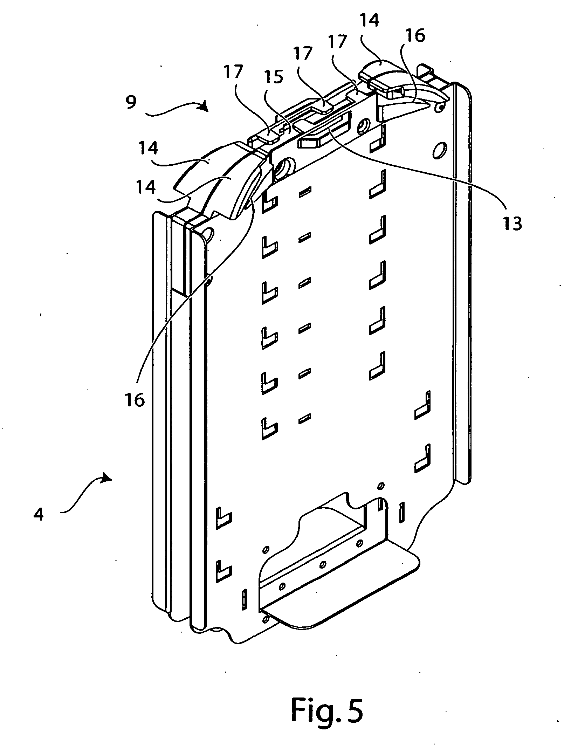

With reference to figure 5, the frame 4 of a cable joint box is shown, deprived of modular devices for housing, distributing and joining fibres, on which the device 9 for housing and protecting fibres of the present invention is arranged, as a seat for the passage of the fibres from one face to the other of the frame 4.

Finally, with reference to figure 6, a cable joint box is shown, in particular for optic fibre cables, according to the present invention, deprived of the cap, but complete of all the modular devices 5 for housing, distributing and joining fibres, on which the device 9 for housing and protecting fibres passing from one face to the other of the frame 4 is visible.

The present invention was described for illustrative non limitative purposes, according to its preferred embodiments, but it has to be understood that any variation and/or modification can be made by the skilled in the art without for this reason escaping the pertinent scope of protection, as defined by the enclosed claims.

## Claims

1. Cable joint box, in particular for optic fibre cables, of the kind comprising a base (1) and a cap (2) that can be opened, on said base being realised one or more passages (3) for cables inlet and/or outlet and being installed a support frame (4) for one or more modular devices (5) for housing, distributing and joining fibres, arranged on the two opposed faces of said frame (4), **characterised in that** it comprises a device (9) for housing and protecting optical fibres passing from one face to the other of said frame (4), and from one side to the other of the same face of said frame (4), said device (9) comprising means for coupling with said frame (4) above the top of the frame (4) and defining a seat (15) for the passage and the protection of the fibres from one face to the other of said frame (4) and from one side to the other of the same face of said frame (4), provided with four inlet areas (16), each defining a continuous curve path radiused with the top of each of the seats for housing the fibres coming up from below and going upward along said frame (4) for housing, the radius of said curve path being greater or equal to the minimum bend radius of the fibres, said seat (15) for the passage of the fibres being protected on the sides by raised portions (14), said means for coupling with said frame being constituted by portions (18) that can be inserted in the room defined between the two faces of said frame (4).

2. Cable joint box according to claim 1, **characterised in that** said seat (15) for the passage of the fibres is further partially protected by one or more tabs (17) provided on the upper portion of said raised portions (14) and bent towards the seat (15).

3. Cable joint box according to any of claims 1-2, **characterised in that** it is constituted by two parts (10) that can be coupled back on back.

4. Cable joint box according to claim 3, **characterised in that** said parts (10) are identical.

5. Cable joint box according to any of claims 3-4, **characterised in that** said parts (10) are realised in plastic material from a single mould.

6. Cable joint box according to any of claims 3-5, **characterised in that** said parts (10) comprise complimentary means for restrained coupling.

7. Cable joint box according to any of claims 3-6, **characterised in that** said parts (10) have a box structure provided with ribs (12).

8. Cable joint box according to any of claims 3-7, **characterised in that** each of said parts (10) comprises a passage (13) for the safety stretch ribbon of the trays (6).

9. Cable joint box according to any of claims 3-8, **characterised in that** each of said two parts (10) defines half seat (15) for the passage and the protection of the fibres, and two inlet areas (16) to said seat (15), each defining a continuous curve path radiused with the top of each of the seats for housing the fibres coming up from below and going upwards along a face of the frame (4) of a cable joint box, the radius of said curve path being greater or equal to the minimum bend radius of the fibres.

10. Cable joint box according to any of claims 3-9, **characterised in that** each of said two parts (10) comprises raised portions (14) for protecting said seat (15).

## Patentansprüche

1. Leitungsverbindungsbox, insbesondere für optische Faserleitungen, von der Art, die aufweist: eine Basis (1) und eine Kappe (2), die geöffnet werden kann, wobei auf der Basis eine oder mehrere Durchführungen (3) für einen Einlass und/oder einen Auslass für Leitungen realisiert sind und wobei ein Stützrahmen (4) für eines oder mehrere modulare Geräte (5) zur Beherbergung, Verteilung und Kopplung von Fasern, installiert ist, die auf den beiden gegenüberliegenden Seiten des Rahmens (4) angeordnet sind, **dadurch gekennzeichnet, dass** sie eine Vorrichtung (9) aufweist zum Beherbergen und Schützen von optischen Fasern, die von einer Seitenfläche des Rahmens (4) zu der Anderen durchgehen und von einer Seite zu der anderen Seite derselben Seitenfläche des Rahmens (4), wobei die Vorrichtung (9) Mittel aufweist zur Verbindung mit dem Rahmen (4) über der Oberseite des Rahmens (4) und zum Definieren eines Sitzes (15) für die Durchführung und zum Schützen der Fasern von einer Seitenfläche zu der Anderen des Rahmens (4) und von einer Seite zu der anderen Seite derselben Seitenfläche des Rahmens (4), versehen mit vier Einlassbereichen (16), die jeweils einen kontinuierlichen, gerundeten Krümmungspfad aufweisen mit der Oberseite von jedem der Sitze zur Beherbergung der von unten ausgehenden und nach oben entlang dem Rahmen (4) zur Beherbergung gehenden Fasern, wobei der Radius des Krümmungspfades größer oder gleich dem minimalen Krümmungsradius der Fasern ist, wobei der Sitz (15) für die Durchführung der Fasern auf den Seiten von angehobenen Abschnitten (14) geschützt ist, wobei die Mittel zum Verbinden mit dem Rahmen aus Abschnitten (18) bestehen, die in den Raum eingeführt werden können, der zwischen den beiden Seitenflächen des Rahmens (4) definiert wird.

2. Leitungsverbindungsbox gemäß Anspruch 1, **dadurch gekennzeichnet, dass** der Sitz (15) für die Durchführung der Fasern weiterhin teilweise geschützt ist durch eine oder mehrere Streifen (17), die auf dem oberen Abschnitt der angehobenen Abschnitte (14) vorgesehen sind und sich in Richtung des Sitzes (15) krümmen.

3. Leitungsverbindungsbox gemäß einem der Ansprüche 1-2, **dadurch gekennzeichnet, dass** sie aus zwei Teilen (10) besteht, die Rücken an Rücken gekoppelt werden können.

4. Leitungsverbindungsbox gemäß Anspruch 3, **dadurch gekennzeichnet, dass** die Teile (10) identisch sind.

5. Leitungsverbindungsbox gemäß einem der Ansprüche 3-4, **dadurch gekennzeichnet, dass** die Teile (10) aus Kunststoffmaterial aus einer einzigen Form realisiert sind.

6. Leitungsverbindungsbox gemäß einem der Ansprüche 3-5, **dadurch gekennzeichnet, dass** die Teile (10) komplementäre Mittel für eine Halteverbindung aufweisen.

7. Leitungsverbindungsbox gemäß einem der Ansprüche 3-6, **dadurch gekennzeichnet, dass** die Teile (10) eine Gehäusestruktur aufweisen, die mit Rippen (12) versehen ist.

8. Leitungsverbindungsbox gemäß einem der Ansprüche 3-7, **dadurch gekennzeichnet, dass** jedes der Teile (10) eine Durchführung (13) für das Sicherheitsausdehnungsband der Einsätze (6) aufweist.

9. Leitungsverbindungsbox gemäß einem der Ansprüche 3-8, **dadurch gekennzeichnet, dass** jedes der beiden Teile (10) einen Halbsitz (15) für die Durchführung und den Schutz der Fasern definiert, sowie zwei Einlassbereiche (16) zu dem Sitz (15), die jeweils einen kontinuierlichen, gerundeten Krümmungspfad definieren mit der Oberseite von jedem der Sitze zur Beherbergung der von unten ausgehenden und nach oben entlang dem Rahmen (4) zur Beherbergung gehenden Fasern einer Leitungsverbindungsbox, wobei der Radius des Krümmungspfades größer oder gleich den minimalen Krümmungsradius der Fasern ist.

10. Leitungsverbindungsbox gemäß einem der Ansprüche 3-9, **dadurch gekennzeichnet, dass** jedes der beiden Teile (10) angehobene Abschnitte (14) aufweist zum Schützen des Sitzes (15).

## Revendications

1. Boîte de jonction de câbles, en particulier pour des câbles à fibres optiques, du type comprenant une base (1) et un capuchon (2) qui peut être ouvert, sur ladite base étant réalisés un ou plusieurs passages (3) pour l'entrée et/ou la sortie de câbles, et étant installé un bâti de support (4) pour un ou plusieurs dispositifs modulaires (5) pour renfermer, distribuer et relier des fibres, disposés sur les deux faces opposées dudit bâti (4), **caractérisée en ce qu'**elle comprend un dispositif (9) pour renfermer et protéger des fibres optiques passant d'une face à l'autre dudit bâti (4), et d'un côté à l'autre de la même face dudit bâti (4), ledit dispositif (9) comprenant des moyens pour le couplage avec ledit bâti (4) au-dessus du sommet du bâti (4) et définissant un siège (15) pour le passage et la protection des fibres d'une face à l'autre dudit bâti (4) et d'un côté à l'autre de la même face dudit bâti (4), munis de quatre zones d'entrée (16), définissant chacune un trajet en courbe continu ayant un certain rayon avec le sommet de chacun des sièges de façon à renfermer les fibres allant vers le haut à partir du dessous et allant vers le haut le long dudit bâti (4) pour l'enfermement, le rayon dudit trajet en courbe étant supérieur ou égal au rayon de courbure minimal des fibres, ledit siège (15) pour le passage des fibres étant protégé sur les côtés par des parties surélevées (14), lesdits moyens pour le couplage avec ledit bâti étant constitués par des parties (18) qui peuvent être insérées dans la chambre définie entre les deux faces dudit bâti (4).

2. Boîte de jonction de câbles selon la revendication 1, **caractérisée en ce que** ledit siège (15) pour le passage des fibres est de plus partiellement protégé par une ou plusieurs pattes (17) disposées sur la partie supérieure desdites parties surélevées (14) et incurvées vers le siège (15).

3. Boîte de jonction de câbles selon l'une quelconque des revendications 1 à 2, **caractérisée en ce qu'**elle est constituée par deux parties (10) qui peuvent être couplées dos à dos.

4. Boîte de jonction de câbles selon la revendication 3, **caractérisée en ce que** lesdites parties (10) sont identiques.

5. Boîte de jonction de câbles selon l'une quelconque des revendications 3 à 4, **caractérisée en ce que** lesdites parties (10) sont réalisées en matière plastique à partir d'un moule unique.

6. Boîte de jonction de câbles selon l'une quelconque des revendications 3 à 5, **caractérisée en ce que** lesdites parties (10) comprennent des moyens complémentaires pour un couplage restreint.

7. Boîte de jonction de câbles selon l'une quelconque des revendications 3 à 6, **caractérisée en ce que** lesdites parties (10) ont une structure de boîte munie de nervures (12).

8. Boîte de jonction de câbles selon l'une quelconque des revendications 3 à 7, **caractérisée en ce que** chacune desdites parties (10) comprend un passage (13) pour le ruban d'étirement de sécurité des plateaux (6).

9. Boîte de jonction de câbles selon l'une quelconque des revendications 3 à 8, **caractérisée en ce que** chacune desdites deux parties (10) définit un demi-siège (15) pour le passage et la protection des fibres, et deux zones d'entrée (16) vers ledit siège (15), définissant chacune un trajet en courbe continu ayant un certain rayon avec le sommet de chacun des sièges de façon à renfermer les fibres allant vers le haut à partir du dessous et allant vers le haut le long d'une face du bâti (4) d'une boîte de jonction de câbles, le rayon dudit trajet en courbe étant supérieur ou égal au rayon de courbure minimal des fibres.

10. Boîte de jonction de câbles selon l'une quelconque des revendications 3 à 9, **caractérisée en ce que** chacune desdites deux parties (10) comprend des parties surélevées (14) pour protéger ledit siège (15).
